# EUROPEAN PATENT APPLICATION

(11) **EP 4 575 035 A1**
(43) Date of publication of application: **25.06.2025**
(21) Application number: 23218314.5
(22) Date of filing: 19.12.2023
(51) Int. Cl.: C25B 1/04, C25B 11/03, C25B 11/052, C25B 11/069, H01M 8/0232, H01M 8/0239, H01M 8/0245, H01M 8/0258

(54) **AN ELECTRODE SHEET FOR TRANSPORT OF LIQUIDS AND GASES**

(71) Applicant: Nederlandse Organisatie voor toegepast-natuurwetenschappelijk Onderzoek TNO, 2595 DA 's-Gravenhage (NL)
(72) Inventor: DIAZ MORALES, Oscar Alfonso, 2595 DA 's-Gravenhage (NL); AMEEN, Mahmoud, 2595 DA 's-Gravenhage (NL); KRONEMEIJER, Auke Jisk, 2595 DA 's-Gravenhage (NL)
(74) Representative: V.O.

(57) **Abstract**

In an aspect, an electrode sheet designed for liquid and gas transport rendered suitable for metallization (5) is provided. The electrode sheet designed for liquid and gas transport (5) comprising a polymer base layer (1) comprising a first and a second face side, rendered suitable for metallization to act as a current collector. The first and/or said second face side of the polymer base layer (1) comprises a structured surface with a pattern of channels (3). The polymer base layer (1) further comprises a plurality of through holes (2) through said base layer (1) to connect the pattern of channels (3) to an opposing face side of the polymer base layer (1).

## Description

### TECHNICAL FIELD OF THE INVENTION

The present disclosure relates to an electrode sheet that efficiently transport liquids and gases, a membrane electrode assembly (MEA) comprising said an electrode sheet, and to a device comprising said an electrode sheet designed for liquid and gas transport, and a method to produce said an electrode sheet designed for liquid and gas transport.

### BACKGROUND OF THE INVENTION

Electrode sheets designed for liquid and gas transport are common in the hydrogen industry and more specifically in fuel cells and electrolyzers.

An electrolyzer is an electrochemical energy converter which splits water (H₂O) by means of electric energy into hydrogen (H₂) and oxygen (O₂). Different electrolyzer designs such as low temperature proton-exchange membrane electrolyzer, an anode-exchange membrane electrolyzer, an alkaline electrolyzer and various high temperature solid oxide electrolyzer are known in the industry. Typical reactions at the anode as well as cathode for a PEM electrolyzer are:
- Anode: 2H₂O → O₂ + 4H⁺ + 4e-
- Cathode: 2H⁺ + 2e⁻ → H₂

A fuel cell is an electrochemical cell which converts the chemical reaction energy of a continuously supplied fuel and an oxidant into electric energy. A fuel cell is thus an electrochemical energy converter. In known fuel cells, hydrogen (H₂) and oxygen (O₂), in particular, are converted into water (H₂O), electric energy and heat. Different fuel cell designs such as a proton-exchange membrane (PEM) fuel cell, a phosphoric acid fuel cell, a solid acid fuel cell, an alkaline fuel cell and several high temperature fuel cells such as for example solid oxide fuel cells and molten carbonate fuel cells.

For a fuel cell instead of decomposing water into oxygen and hydrogen, water may be formed by the uptake of electrons from the external circuit and protons, which have travelled through the membrane to the cathode. The water formed in this way may be discharged from the fuel cell. The net reaction is:
- Anode: H₂ → 2H⁺ + 2e⁻
- Cathode: O₂+ 4H⁺+ 4e⁻ → 2H₂O

One of today's most common electrolyzers and fuel cells are proton-exchange membrane (PEM) electrolyzers or fuel cells. A PEM can easily be recognized as the cathode and anode side are separated by a polymer electrolyte membrane such as polyfluoroalkyl based polymers. Typically a PEM electrolyzer or fuel cell comprises bipolar plates, electrodes, one or more catalyst layers, an electrolyte membrane, one or more current collectors and one or more gaskets. One of the main disadvantages of the PEM electrolyzers or PEM fuel cells are the rather high cost and low durability, limiting the introduction and penetration of PEM electrolyzers and PEM fuel cells into multiple industries.

A key aspect related to the high cost of a PEM-device would be the use of bulky and heavy bipolar plates (BPPs). BPPs are for example responsible for about 20% of the total cost of a fuel cell or electrolyzer. Today the majority of BPPs are made out of metals like titanium. Hence, the high cost of a BPP is primarily related to raw materials and the high manufacturing cost for forming channels requiring high temperature and pressure. Further, the BPP will be coated with a corrosion resistant layer. In PEM-devices, BPPs are responsible for transporting and distributing reactant gases, may act as current collector, may provide for heat and water management and may separate the individual cells located inside a single PEM-device.

Another major cost element is related to the membrane electrode assembly (MEA), in particular the raw materials used to assemble to membrane. In general, the expectation would be that 60% of the overall cost of a fuel cell/electrolyzer would be attributed to raw materials.

Further, when assembling a single cell and/or stacks, the BPPs and MEAs need to be handled separately as the BPPs, at present, require process steps that exceed the limitations such as temperature resistance of materials used within the MEA. Hence, increasing the amount of production steps and making the production of devices more complex. Therefore, contribute to the high cost associated with PEM-devices.

Furthermore, components of the PEM devices such as electrolyzers and fuel cells, at present, are not fully optimized for specific applications. Therefore, a PEM device also exploits an expensive and sub-optimized porous transport layer (PTL). Further, a PEM-device comprises a bad utilization of scarce and costly catalyst material, a poorly optimized surfaces for electrocatalytic activity and use of non-environmental friendly based membrane material.

To facilitate the reaction and transport of the reaction reagents, protons, or the reaction products various materials often comprise poorly optimized pore sizes and/or pore distribution. Hence, limiting proper movement in the electrolyzer or fuel cell. Further, as aforementioned the porous transport layer at present, mostly, is assembled with structured bipolar plates to accommodate the distribution of reactants and products in gas or liquid form.

The present invention aims at simplifying, optimizing the design and/or assembly of an electrode sheet designed for liquid and gas transport, membrane electrode assembly or PEM-device to reduce cost, weight or complexity of an electrolyzer and/or fuel cell. Further, the present invention may be manufactured in a continuous process.

### SUMMARY

Aspects of the present disclosure relate to an electrode sheet designed for liquid and gas transport rendered suitable for metallization to address one or more bottlenecks encountered in a PEM-device manufacturing process such as a non-optimized porous transport layer (PTL), a non-improved utilization of costly scarce catalyst, high weight of bipolar plates and/or limitations in manufacturing scalability.

Accordingly, an electrode sheet designed for liquid and gas transport rendered suitable for metallization has been designed. The electrode sheet designed for liquid and gas transport rendered suitable for metallization comprises a polymer base layer comprising a first and a second face side. The electrode sheet designed for liquid and gas transport rendered suitable for metallization may act as a current collector. The first and/or the second face side of the polymer base layer comprises a structured surface with a pattern of channels. Further, the polymer base layer comprises a plurality of through holes through said base layer to connect the pattern of channels to an opposing face side of the polymer base layer. The structured surface resulting in diffusion and uniform distribution of reagent(s) like for example water (H₂O) or gases such as hydrogen gas (H₂) and/or reaction products. The plurality of through-holes may allow easy and/or optimized transport from an inlet to a catalyst layer or may facilitate the disposal om various reaction product(s).

The polymer base layer comprising a structured surface and a plurality of through holes may further be provided with a functional layer and/or a metalized layer. The optional functionalization of the polymer base layer may result in an improved anchoring between the polymer base layer and the metallization layer. Further, the metallization layer may act as an electrode, a current collector and/or optionally may remove heat generated during the reaction(s).

The pattern of channels in the gas permeable sheet may further comprise a plurality of interconnected trenches. The trenches may have a width in a range of 0.1 µm to 100 µm. Trenches may increase an electrochemically active area, as such may increase the efficiency of a PEM-device and/or may facilitate distribution of the reagents and/or products after the anode or cathode reaction.

Further, the design of an electrode sheet designed for liquid and gas transport according to the invention may be further optimized, upon choosing an application such as electrolyzer or fuel cell, by selecting a through-hole diameter in a range of 0.05 µm to 100 µm.

In a further aspect of the present invention, the metallization layer provided on the sheet designed for liquid and gas transport may have a thickness in a range of 0.01 µm to 150 µm. Furthermore, the metallization layer may be selected from the group consisting of titanium, tantalum, niobium, platinum, gold or other suitable metal. Reducing the metallization layer may positively influence the weight of a PEM-device and optionally may reduce the cost of a PEM-device as the amount of metal may reduce. In another aspect of the present invention, the metallized layer may fully cover the polymer base layer. Hence, the fully metallized polymer base layer may optionally serve as a bipolar plate and/or a current collector. The fully metallized layer may further reduce the weight and/or thickness of a PEM-device.

In a further aspect of the present invention, an anode stack may comprise the electrode sheet designed for liquid and gas transport according to the invention. The anode stack may be permeable to an anode reaction reagent(s) and/or reaction products. The anode stack layer further comprises a first catalyst layer to facilitate the anode reaction such as the decomposition of H₂O to H⁺, O₂ and e⁻ in an electrolyzer. The pattern of channels comprising the first catalyst layer in the electrode sheet designed for liquid and gas transport may be directed towards an electrolyte layer. The electrolyte layer separating the anode stack from a cathode stack. The anode stack comprising the electrode sheet designed for liquid and gas transport may have the advantage of having a thinner stack which may increase the number of cells per volume.

In another aspect of the invention a membrane electrode assembly (MEA) comprises the anode stack according to the invention. The MEA further comprises an electrolyte, optionally the electrolyte may comprise a membrane, and/or a cathode stack.

In another aspect of the present invention, the cathode stack comprises a second catalyst layer. The cathode stack permeable to cathode reaction products and/or reaction reagents. The cathode gas permeable electrode sheet may further comprise a gas permeable electrode sheet according to the invention optionally further optimizing the thickness and weight of the membrane electrode assembly. In a further aspect of the invention the membrane electrode assembly according to the invention may have a thickness in a range of 100 µm to 500 µm.

In another aspect of the present an electrolysis device comprising at least one membrane electrode assembly according to the invention. The electrolysis device may further comprise one or more outlets, one or more inlets, a power source, and optionally one or more bipolar plates, at least one flow field or current collector.

### BRIEF DESCRIPTION OF DRAWINGS

These and other features, aspects, and advantages of the apparatus, systems and methods of the present disclosure will become better understood from the following description, appended claims, and accompanying drawing wherein:
Figure 1A displays a top view of a polymer base layer with optical microscope, according to the invention;
Figure 1B-D display a Scanning Electron Microscopy (SEM) pictures of a polymer base layer according to the invention;
Figure 2A displays the polymer base layer depicted in figure 1A further comprising a functional layer;
Figure 2B displays the polymer base layer depicted in figure 1A further comprising a metallization layer;
Figure 2C displays the polymer base layer depicted in figure 2B further comprising a first catalyst layer;
Figure 3 displays a schematic expanded view of figure 2C;
Figure 4 displays an electrolysis device comprising a single cell unit;
Figure 5 displays two single cell units depicted in figure 4;
Figure 6 shows a single cell unit electrolysis device.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

As used herein, the term "electrode sheet designed for liquid and gas transport", refers to a sheet capable of permeating and distributing anode and/or cathode reaction reagents and/or anode and/or cathode reaction products. The reagents and/or products may be in liquid and/or in gaseous form.

The invention described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

The increased focus on green energy alternatives has put more attention to the development of hydrogen related technologies. Renewable electricity can be stored in the form of chemical energy, by generating hydrogen gas from water in an electrolyzer. The generated hydrogen can be stored and consequently be used to generate electricity with fuel cells. Both an electrolyzer as well as a fuel cell may be recognized as green alternatives when, for example the energy needed to convert H₂O in H⁺, O₂ and e⁻, would be supplied by environmental energy systems such as solar panels, wind mills. Hence, hydrogen production from water electrolysis, using renewable energy, may be considered is an important solution for long term energy storage. Additionally, an electrolyzer may help with the decarbonization of various industries.

As of today, multiple electrolyzers have been introduced into the market such as a proton-exchange membrane (PEM) electrolyzer, an anode-exchange membrane electrolyzer, an alkaline electrolyzer and a solid oxide electrolyzer. A PEM-stack, at present, may be considered as the most dynamic as well as efficient water electrolysis system resulting in very high H₂ purity. A key bottleneck of PEM-stacks is related to the manufacturing of affordable, high performing PEM-stacks. Hence, limiting expansion of PEM-based devices.

The high cost of PEM-stacks pertained to the manufacturing process is related to:
1. Costly bipolar plates
2. Expensive and sub-optimized porous transport layer (PTL)
3. Deficient utilization of valuable and scarce catalyst materials
4. Inadequately optimized surfaces for electrocatalytic activity
5. Use of non-environmental friendly membrane materials acting as an electrolyte material.
6. Scalability issues for manufacturing

Conventionally, the PTL may comprise titanium (Ti) structures. The Ti-structure can act as a current collector in PEM stacks and/or act as support for the electrochemically active area. The Ti-layer primarily would be applied using conventional process such as chemical vapor depositions. At present, the PTL has not been optimized for electrolysis applications. In particular, the bulk geometry, the 3D structure and the surface termination are not fully optimized for usage in a PEM-device. Hence, negatively influencing the cost of a PEM-device.

Conventional single unit cells comprise a porous transport layer, an active layer and a current collector. The porous transport layer may be used to uniformly distribute the incoming gas towards the active layer. The active layer may further comprise a catalyst layer supporting and facilitating the reaction mechanism to convert a reaction reagent into respective ions and electrons. The electrons may be collected by the current collector while ions or protons may be transported throughout an electrolyte and/or a porous membrane. The protons will either combine with electrons or with oxygen and electrons in respectively an electrolyzer or a fuel cell.

A membrane electrode assembly (MEA) may comprise an anode porous transport layer, an electrolyte material such as a polyfluoroalkyl based polymer membrane and a cathode porous transport layer. Currently, a MEA single cell may be composed of a hybrid organic/inorganic porous transport layer, current collectors, electrocatalyst and a proton-conductive membrane allowing PEM water electrolysis with high surface area and high materials utilization.

To manufacture an electrolyzer or a fuel cell, a MEA may further comprise bipolar plates, support equipment to facilitate the supply as well as the disposal of the reactant gases and the final products such as hydrogen gas or water for respectively an electrolyzer or a fuel cell.

It is an aspect of the present invention to provide an electrode sheet designed for liquid and gas transport rendered suitable for metallization. The electrode sheet designed for liquid and gas transport may further provide a solution to one or more of the above-mentioned reasons related to the high cost of manufacturing PEM-stacks. Further, the present invention may be capable of replacing at least the porous transport layer.

The electrode sheet designed for liquid and gas transport according to the invention may be engineered or designed to enable a high performance, a better integration and reduce material utilization when compared to conventional manufacturing methods. The sheet may be manufactured separately and used as an isolated assembly product for assembly of an electrode sheet designed for liquid and gas transport. This product can be produced separately for combination in an electrode stack, in particular an anode or cathode stack, for an electrolysis device. Consequently, the thickness of the electrode sheet designed for liquid and gas transport may be reduced. In a preferred embodiment the thickness may be reduced at least a 2-fold, more preferred at least a 5- fold, most preferred at least a 10-fold. Hence, more single cell units may be integrated in a same volume of a stack. Therefore, may lead to more hydrogen production in a same electrolyzer-volume.

The electrode sheet designed for liquid and gas transport rendered suitable for metallization according to the invention, comprises a polymer base layer. The polymer base layer further comprising a first and a second face side that may be rendered suitable for metallization to act as a current collector. Said first and second face side of the polymer base layer comprises a structured surface with a pattern of channels. Further, the polymer base layer may comprise of a plurality of through holes throughout said base layer. The through holes may help to connect the pattern of channels to an opposing face side of the polymer base layer.

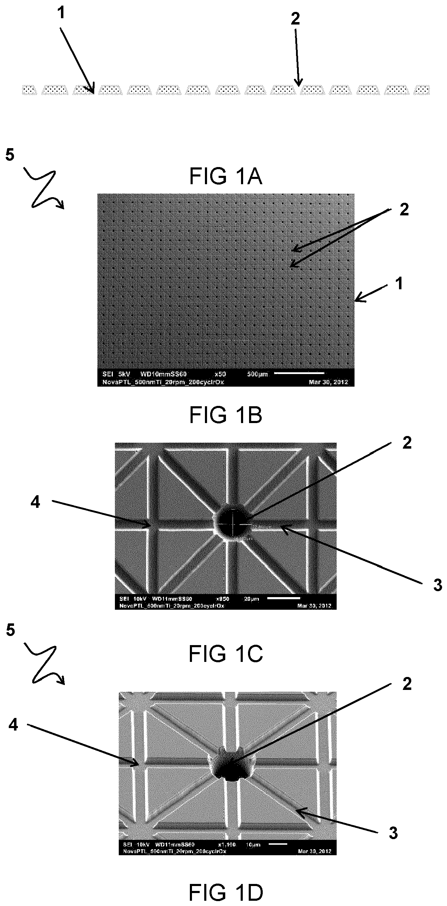

Examples of a polymer base layer 1 comprising a structured surface with a pattern of channels as well as a plurality of through holes 2 is shown in FIG 1A.

Similarly, Figure 1B shows a scanning electron microscopy of gas permeable sheet 5 including polymer base layer 1. Base layer 1 comprises a plurality of through holes 2, a pattern of channels 3. Figures 1C and 1D show an expanded view of Figure 1B. Figures 1C and 1B comprising a through hole 2, a pattern of channels 3 and intersection 4 of channels or trenches 3 connecting opposing sides of the polymer base layer 1.

The interconnection at intersection 4 makes it possible to distribute the incoming reaction reagents and/or the outgoing reaction products associated with the anode reaction and/or cathode reaction.

In a further aspect of the present invention, the channels 3 and/or interconnected trenches may have a width in a range of 0.1 µm and 100 µm, preferably in a range of 0.5 µm to 20µm, more preferably in a range of 1 to 10 µm.

In another aspect of the present invention, the through holes 2 may have a diameter in a range of 0.05 µm to 100 µm, preferably in a range of 0.5 µm to 20 µm, more preferably in a range of 1 µm to 10 µm.

The wide ranges in channel 3 and/or trench width and the wide range of through hole 2 diameter may permit for a proper optimization of the electrode sheet designed for liquid and gas transport 5 and thus may allow for an improved distribution of the reagents and/or products or for an enhanced diffusion of the reagents and products associated with an electrolyzer process or a fuel cell process.

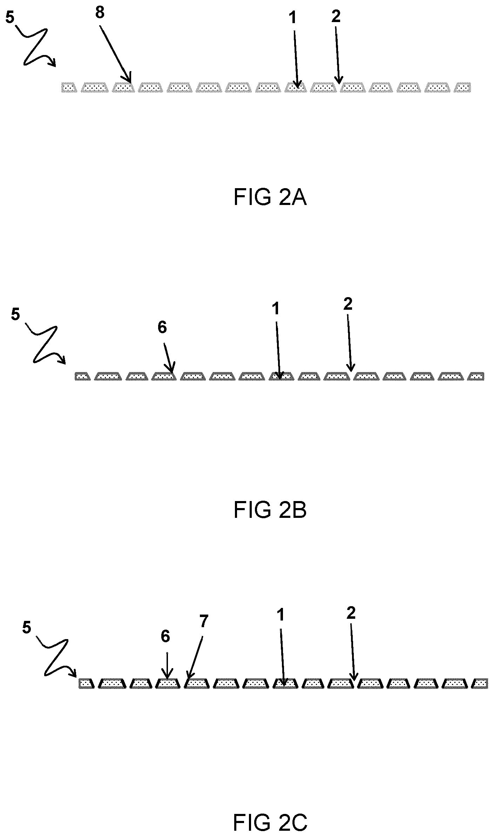

As shown in Figure 2A the electrode sheet designed for liquid and gas transport sheet 5 rendered suitable for metallization according to the invention may further comprise a functional layer 8. The functional layer 8 may optionally be applied to the base polymer layer 1 to increase the anchorage of a metalized layer 6 (See Figure 2B) to the polymer base layer 1, which may further increase the quality of the electrode sheet designed for liquid and gas transport 5 rendered suitable for metallization. Hence, depending on the polymer base layer 1 and the metallization layer 6, a functional layer optionally will be applied.

FIG 2B, shows an electrode sheet designed for liquid and gas transport 5 comprising a polymer base layer 1 and a plurality of through holes 2 according to the invention further comprising the metallization layer 6.

In a preferred embodiment, the metallized layer 6 may be selected from the group consisting of titanium, tantalum, niobium, platinum or gold. The preferred metals have the advantage of being chemically, thermally as well as mechanically stable under severe conditions such as temperatures up to 80°C, a minimum pressure of 20 bar, resistance to acidic environments associated with an electrolyzer or fuel cell process. Further, the metallized layer 6 may provide for a proper electronic conduction and/or thermal conduction to remove heat away from the stack.

In another preferred embodiment of the present invention, the metallized layer 6 may fully cover the polymer base layer 1. An encapsulated polymer base layer 1 may allow proper transport of the electrons as well as may provide for an improved heat removal.

In another aspect of the present invention, the metallized layer 6 may have a thickness in a range of 0.1 µm to 10 µm, preferably in a range of 0.1 µm to 5 µm, more preferably in a range of 0.5 µm to 1 µm.

In another embodiment, an anode stack may be designed. The anode stack comprising the gas permeable electrode sheet 5 according to the invention. The electrode sheet designed for liquid and gas transport 5 being permeable to the reaction reagent and/or the reaction products of the anode reaction. The anode stack may further comprise a first catalyst layer 7. The first catalyst layer 7 may be applied directly to the electrode sheet designed for liquid and gas transport 5 according to the invention, as shown in FIG 2C, and thereby also covering the pattern of channels and/or interconnected trenches.

In particular in figure 2C, a sideview of an electrode sheet designed for liquid and gas transport 5 according to the invention is shown. The sheet designed for liquid and gas transport 5 comprising a polymer base layer 1, a plurality of through holes 2, a metalized layer 6 and a first catalyst layer 7. The electrode sheet designed for liquid and gas transport 5 shown in figure 2D may act as in anode stack.

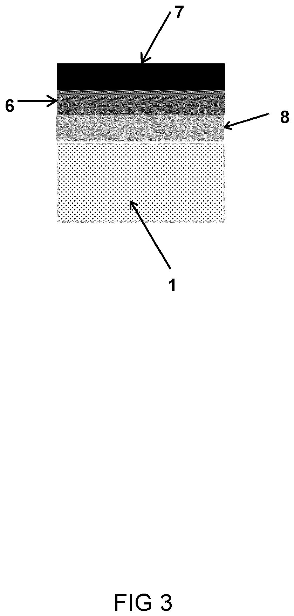

Figure 3 displays a schematic expanded view of figure 2C comprising a first catalyst layer 7 on a through hole 2. Figure 3, further comprising the polymer base layer 1, a functional layer 8, a metallized layer 6 and a first catalyst layer 7.

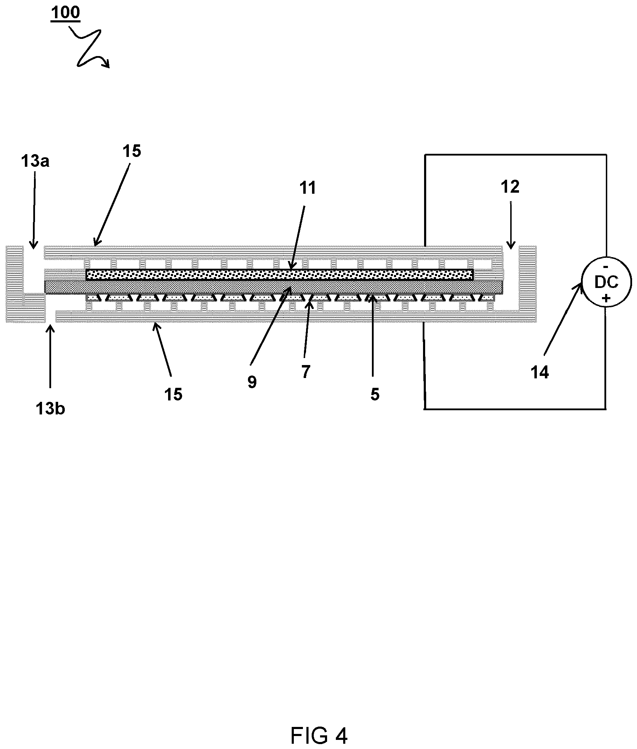

Furthermore, the first catalyst layer 7 coated electrode sheet designed for liquid and gas transport 5 may be directed towards an electrolyte layer 9 - see Figure 4. The electrolyte layer 9 allowing for proper transport of the protons associated with an electrolyzer or a fuel cell reaction.

In another embodiment of the present invention, a thickness of the anode stack may be in a range of 1 µm to 200 µm, preferably in a range of 10 µm to 150 µm, more preferably in a range of 50 µm to 150 µm.

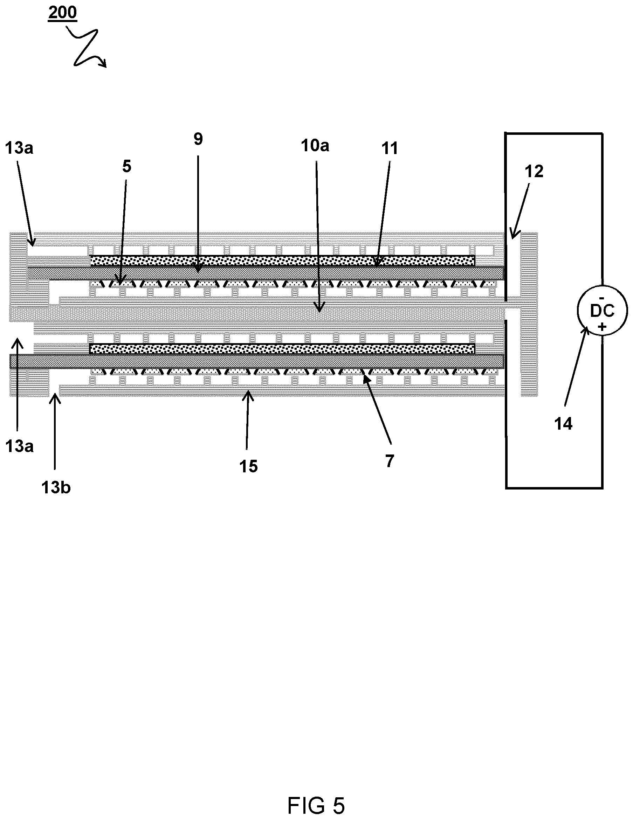

Another aspect of the present invention, relates to a PEM-device comprising one or more MEA's according to the invention, as shown in FIG 4 and FIG 5. A membrane electrode assembly may be designed comprising the anode stack according to the invention. The MEA may further comprise an electrolyte 9 and/or a cathode stack 11. The MEA according to the invention may have a thickness in a range of 100 µm to 500 µm, preferably in a range of 100 µm to 250 µm, more preferably in a range of 100 µm to 150 µm.

The cathode stack may comprise a second catalyst layer and a second electrode sheet designed for liquid and gas transport. The second catalyst layer may facilitate the cathode reaction such as the recombination of H⁺ and e⁻ to H₂ in an electrolyzer. The cathode stack being permeable to the cathode reaction products and may further comprise a second gas permeable electrode sheet 5 according to the invention.

More specifically, figure 4 shows a PEM-electrolyzer 100 comprising an electrode sheet designed for liquid and gas transport 5 according to the invention. The electrode sheet designed for liquid and gas transport 5 comprising a first catalyst layer 7. The PEM-electrolyzer 100 further comprising an electrolyte material 9, a cathode stack 11, bipolar plates 10, one inlet 12, two outlets 13a, 13b and a power source 14.

Figure 5 shows an electrolysis device 200 comprising 2 single unit cells. The electrolysis device 100 comprising an electrode sheet designed for liquid and gas transport 5 according the invention. The electrode sheet designed for liquid and gas transport 5 comprising a first catalyst layer 7 and may act as an anode stack. The electrolysis device further comprising one or more electrolyte materials 9, one or more cathode stacks 11, a bipolar plate 10a, one or more end-plates 15, one or more outlets 13a, 13b, 13c, one or more inlets 12 and a power source 14.

In another further aspect of the present invention, one or more end plates 15 may be designed containing a polymer base layer instead of a metal-like substrate. The one or more endplates 15 comprise a polymer base layer, said polymer base layer further comprises a third structured surface comprising a third pattern of channels. The one or more endplates 15 may further comprise an optional functional layer, such that the anchorage of the metallized layer would improve. The endplate 15 further comprises a metallized layer. The metallized layer 6 may allow the one or more endplates 15 to act as a current collector and may help to remove heat from the first and/or second catalyst layer. The one or more endplates 15 may further reduce the thickness and/or weight of a single unit cell.

The PEM-device may optionally comprise at least one bipolar plate 10 acting as a current collector and/or distributing the reaction reagents and products of the anode and cathode reactions between sequential membrane electrode assemblies. One or more outlets 13a, 13b for removing reaction reagent and/or products of an anode and a cathode reaction. One or more inlets supplying the anode reaction reagent(s). Optionally two or more end plates 15 providing the electrolysis device 100 with a start- and an end-point. One or more gasket materials providing seals in the electrolysis device 200 and a power source 14 providing the energy needed to perform an anode reaction.

In another further aspect of the present invention, an amount of single cell units in the same volume of a stack may be increased at least by a factor of 3, preferably at least by a factor of 5, more preferably by a factor of 10.

Utilizing a electrode sheet designed for liquid and gas transport 5 according to the invention in an anode stack, a cathode stack, a membrane electrode assembly or a PEM-device may result in an improved flow dynamics, may result in an improved material utilization, may improve device performance, may reduce the number of fabrication steps, may result in energy savings, may decrease mechanical stress on the membrane such that the stability and safety may improve, may provide for a scalable manufacturing process or may optionally allow easier recyclability of the stack. Hence, a lower cost of the stack, MEA or PEM-device may be expected.

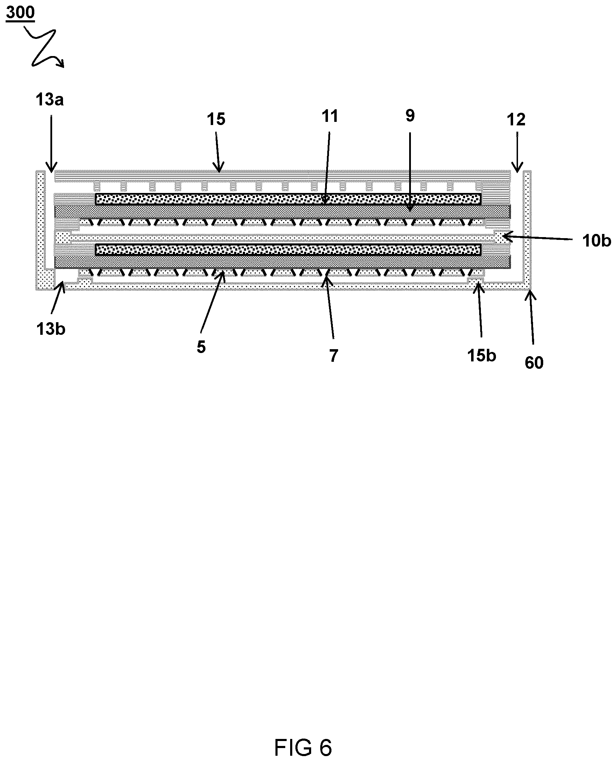

In another aspect of the present invention, an electrolysis device 300 is shown in Figure 6, wherein polymer base layer 1 is rendered suitable for metallization may act as bipolar plate 10b. The bipolar plate 10b according to the invention may comprise a second structured surface comprising a second pattern of channels. The metallization layer 60 may help to allow the bipolar plate 10b to act as a current collector and may help to remove heat from the first and/or second catalyst layer. A bipolar plate 10b according to the present invention may further reduce the thickness and/or the weight of a single unit cell. Additionally, having a bipolar plate 10b according to the invention may solve the lack of continuous process seen in a construction of a PEM device as the bipolar plate 10b can be processed simultaneously or by at least utilizing the same process conditions as yeast for the gas permeable electrode sheet 5 according to the invention.

In particular, FIG 6 shows a single cell unit electrolysis device comprising an electrode sheet designed for liquid and gas transport 5 according the invention. The electrode sheet designed for liquid and gas transport 5 further comprising a first catalyst later 7. The electrode sheet designed for liquid and gas transport 5 may act as anode stack in the electrolysis device. The electrolysis device further comprises an endplate 15 which supports 15b. The electrolysis device further comprising an electrolyte material 9, a cathode stack, two outlets 13a, 13b, and an inlet 12.

In a further aspect of the present invention, the first, second and third structured surface comprising a first, second or third pattern of channels comprise the same pattern of channels.

In a further aspect of the present invention, a method of manufacturing the electrode sheet designed for liquid and gas transport 5 rendered suitable for metallization according to the invention may be described, the method comprising the steps of:
1. Laminating a first mask on a polymer base layer 1 obtaining a first masked polymer base layer.
2. Forming a plurality of through holes 2 or a structured surface with a pattern of channels 3 using photolithography on said first masked polymer base layer 1.
3. Removing the first mask from the polymer base layer 1 obtaining a first modified polymer base layer 1.
4. Laminating a second mask on the first modified polymer base layer 1 obtaining a masked first modified polymer base layer.
5. Forming a plurality of through holes 2 or a structured surface with a pattern of channels 3 using photonic lithography to obtain a second modified polymer base layer 1.
6. Removing the second mask from the second modified polymer base layer.
7. Optionally, coating a functional layer 8 on the second modified polymer base layer 1.
8. Coating the optionally coated second modified polymer base layer 1 with a metal layer 6 e.g. using Chemical Vapor Deposition (CVD), Physical Vapor Deposition (PVD), Electroless plating, Electroplating or any physical or chemical deposition method suitable for applying metal layers, obtaining a metallized modified polymer base layer.
9. Optionally, coating a first 7 or a second catalyst layer upon the metallized modified polymer base layer.

For the purpose of clarity and a concise description, features are described herein as part of the same or separate embodiments, however, it will be appreciated that the scope of the invention may include embodiments having combinations of all or some of the features described. For example, while embodiments were shown for PEM electrolysis, also alternative ways may be envisaged by those skilled in the art having the benefit of the present disclosure for achieving a similar function and result. E.g. PEM fuel cell, alkaline membrane electrolysis and/or fuel cell, CO₂ electrolysis may be combined or split up into one or more alternative components. The various elements of the embodiments as discussed and shown offer certain advantages, such as thinner/more compact devices, optimized porous transport layers. Of course, it is to be appreciated that any one of the above embodiments or processes may be combined with one or more other embodiments or processes to provide even further improvements in finding and matching designs and advantages. It is appreciated that this disclosure offers particular advantages to electrolyzers, and in general can be applied for any application wherein involving porous transport layers.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. An electrode sheet designed for liquid and gas transport comprising:
a polymer base layer comprising a first and a second face side, rendered suitable for metallization to act as a current collector; wherein
said first and/or said second face side of the polymer base layer comprises a structured surface with a pattern of channels, and wherein
the polymer base layer comprises a plurality of through holes through said base layer to connect the pattern of channels to an opposing face side of the polymer base layer.

2. The electrode sheet designed for liquid and gas transport according to claim 1, wherein the polymer base layer rendered suitable for metallization comprises a functional layer and/or a metalized layer.

3. The electrode sheet designed for liquid and gas transport according to any of claims 1 or 2, wherein the pattern of channels comprises a plurality of interconnected trenches.

4. The electrode sheet designed for liquid and gas transport according to any of claims 1-3, wherein the interconnected trenches have a width in a range of 0.1 µm to 100µm.

5. The electrode sheet designed for liquid and gas transport according to any of the preceding claims, wherein the plurality of through holes have a diameter in a range of 0.05 µm to 100 µm.

6. The electrode sheet designed for liquid and gas transport according to any of the preceding claims, wherein the metallized layer has a thickness in a range of 0.1 µm to 10 µm.

7. The electrode sheet designed for liquid and gas transport according to any of the preceding claims, wherein a metal of the metallized layer is selected from the group consisting of titanium, tantalum, niobium, platinum or gold.

8. The electrode sheet designed for liquid and gas transport according to any of the preceding claims, wherein the metallized layer fully covers the polymer base layer.

9. An anode stack comprising the sheet according to any of the preceding claims that is permeable to anode reaction reagent(s) and/or product(s) and comprises a first catalyst layer wherein the pattern of channels comprising the first catalyst layer in the electrode sheet designed for liquid and gas transport are directed towards an electrolyte layer.

10. A membrane electrode assembly (MEA) comprising the anode stack according to claim 9, an electrolyte and/or a cathode stack.

11. The cathode stack according to claim 10, wherein the cathode stack comprises a second catalyst layer and an electrode sheet designed for liquid and gas transport.

12. The electrode sheet designed for liquid and gas according to claim 10, wherein the electrode sheet designed for liquid and gas transport is permeable to cathode reaction products and comprises an electrode sheet designed for liquid and gas transport according to any of claims 1-8.

13. The membrane electrode assembly according any of the claims 10-12, wherein a thickness of the MEA is in a range of 100 to 500 µm.

14. An electrolysis device comprising at least one membrane electrode assembly according to any of the claims 10- 13 further comprising:
- optionally at least one bipolar plates acting as a current collector and/or distributing the reaction reagents and products of the anode and cathode reactions between sequential membrane electrode assemblies;
- one or more outlets removing reaction reagent and/or products of an anode and a cathode reaction;
- one or more inlets supplying the anode reaction reagent(s);
- optionally two or more end plate providing the electrolysis device with a start- and an end-point;
- one or more gasket materials providing seals in the electrolysis device.
- a power source providing energy needed to perform an anode reaction.
